# EUROPÄISCHE PATENTANMELDUNG

(11) **EP 1 752 923 A1**
(43) Veröffentlichungstag der Anmeldung: **14.02.2007**
(21) Anmeldenummer: 06116890.2
(22) Anmeldetag: 10.07.2006
(51) Int. Cl.: G06Q 10/00

(54) **Verfahren und System zur Steuerung der Abwicklung von Geschäftsprozessen der Logistik sowie Logistikmanagementsystem**

(30) Priorität: 29.07.2005 DE 102005036323
(71) Anmelder: SIEMENS AKTIENGESELLSCHAFT, 80333 München (DE)
(72) Erfinder: Bluth, Roland, 90768, Fürth (DE); Dillmann, Markus, 90427, Nürnberg (DE); Hübner, Reiner, 91074, Herzogenaurach (DE); Neumann, Bernd, 91083, Baiersdorf (DE)

(57) **Zusammenfassung**

Zur Steuerung der Abwicklung von Geschäftsprozessen der Logistik, insbesondere der Ersatzteillogistik, wird vorgeschlagen, einen Geschäftsprozess (4) als eine ereignisgesteuerte Prozesskette (7) zu modellieren, in der zur Abwicklung des Geschäftsprozesses notwendige abwicklungstechnische, bestandsrelevante und werteflussrelevante Funktionen (10, 11, 12) definiert sind, wobei die Ausführung der ereignisgesteuerten Prozesskette (7) auf einem ersten Computersystem (2) und einem zweiten Computersystem (3) erfolgt, wobei das erste und das zweite Computersystem unabhängige voneinander betreibbar sind, und wobei die Ausführung der auftragsrelevanten und der bestandsrelevanten Funktionen (10, 11) in dem ersten Computersystem (2) und die Ausführung der werteflussrelevanten Funktionen (12) in dem zweiten Computersystem (3) erfolgt.

## Beschreibung

Die Erfindung betrifft ein Verfahren und ein System zur Steuerung der Abwicklung von Geschäftsprozessen der Logistik sowie ein Logistikmanagementsystem.

Geschäftsprozesse der Logistik, und hierbei insbesondere Geschäftsprozesse der Ersatzteillogistik im After Sales Service, zeichnen sich durch hohe Komplexität aus, denn mit ihrer Abwicklung einer Vielzahl auftragsrelevanter Aufgaben, z.B. das Anlegen und Verwalten von auftragsrelevanten Daten, sowie bestandsrelevanter und werteflussrelevanter Aufgaben, z.B. die Aktualisierung von Informationen über den Zufluss und Abfluss von Lagerbeständen und der damit verbunden Werteflüsse verbunden. Beispiel für derartige Geschäftsprozesse sind Ersatzteilverkauf, Streckengeschäft, Entleihung, Retoure, Rückkauf, Austausch oder Mängelhaftungsabwicklung ohne Warenfluss.

Die Modellierung derartiger Geschäftsprozesse und die Steuerung deren Abwicklung ist bereits mit Hilfe von Standard-ERP-Systemen (z.B. SAP R/3) möglich. Ein Geschäftsprozess wird dann mit seinen auftrags-, bestands- und werteflussrelevanten Funktionen in dem ERP-System modelliert und zur Ausführung gebracht. Allerdings ist die Modellierung von Geschäftsprozessen in derartigen ERP-Systemen nur durch die Verknüpfung aufwändiger Transaktionsketten realisierbar. Insbesondere besteht keine Möglichkeit, kundenspezifische Geschäftsprozesse aufwandsgerecht und zeitnah zu optimieren. Zudem besteht das Problem, dass die Abwicklung des Geschäftsprozesses eng mit dem ERP-System gekoppelt ist, so dass die Abwicklung des Geschäftsprozesses, z.B. durch einen Logistikdienstleister, nicht ohne das ERP-System erfolgen kann. Außerdem führen Störungen im ERP-System zu Verzögerungen in der Abwicklung der meist zeitkritischen logistischen Funktionen.

Es ist deshalb Aufgabe vorliegender Erfindung, ein Verfahren und ein System zur Steuerung der Abwicklung von Geschäftsprozessen der Logistik sowie ein Logistikmanagementsystem anzugeben, die es ermöglichen, flexibel und aufwandsarm kundenspezifische Logistikprozesse zu modellieren und deren Abwicklung zu steuern, wobei eine möglichst verzögerungsfreie Abwicklung zeitkritischer logistischer Aufgaben des Geschäftsprozesses möglich sein soll.

Die Lösung der auf das Verfahren gerichteten Aufgabe gelingt erfindungsgemäß durch ein Verfahren gemäß Patentanspruch 1. Die Lösung der auf das System gerichteten Aufgabe gelingt erfindungsgemäß durch ein System gemäß Patentanspruch 7. Ein Logistikmanagementsystem ist Gegenstand des Patentanspruchs 18. Vorteilhafte Ausgestaltungen sind jeweils Gegenstand der Unteransprüche.

Das erfindungsgemäßen Verfahren sieht vor, dass ein Geschäftsprozess als eine ereignisgesteuerte Prozesskette modelliert wird, wobei durch die ereignisgesteuerte Prozesskette auftragsrelevante, bestandsrelevante und werteflussrelevante Funktionen definiert sind. Die Ausführung der ereignisgesteuerte Prozesskette erfolgt hierbei auf einem ersten Computersystem und einem zweiten Computersystem, wobei die beiden Computersysteme unabhängige voneinander betreibbar sind. Die Ausführung der auftragsrelevanten und der bestandsrelevanten Funktionen erfolgt dann in dem ersten Computersystem und die Ausführung der werteflussrelevanten Funktionen in dem zweiten Computersystem.

In einer ereignisgesteuerte Prozesskette sind eine Anzahl von Ereignissen und Funktionen definiert, die miteinander verknüpft sind. Ereignisse lösen hierbei eine oder mehrere Funktionen aus, die wiederum ein oder mehrere Ereignis auslösen. Durch die Modellierung des Geschäftsprozesses als eine ereignisgesteuerte Prozesskette können die komplexen Logistikprozesse aufgebrochen und transparent gemacht, analysiert und anschließend mit hoher Genauigkeit und Transparenz modelliert werden.

Durch die Trennung der werteflussrelevanten Funktionen von den bestandsrelevanten und den auftragsrelevanten Funktionen, d.h. den eigentlichen logistischen Funktionen, und deren Ausführung in zwei unterschiedlichen Computersystemen ist es möglich, das erste Computersystem hinsichtlich der Modellierung und Durchführung der eigentlichen logistischen Aufgaben zu optimieren, zum Beispiel als ein Logistikmanagementsystem auszubilden, während das zweite Computersystem hinsichtlich der Durchführung der werteflussrelevanten Aufgaben optimiert werden kann. Bevorzugt handelt es sich bei dem zweiten Computersystem um ein ERP-System. Die mit der Abwicklung des Geschäftsprozesses verbundenen Werteflüsse können dann nahezu in Echtzeit in dem ERP-System nachgezogen werden. Das erste Computersystem kann somit von einem Logistikdienstleister betrieben werden, der mit Hilfe dieses Systems die Abwicklung der Logistik für einen oder mehrer Kunden übernimmt, deren jeweiliges ERP-System an das Logistikmanagementsystem des Logistikdienstleisters angebunden ist.

Wenn das zweite Computersystem ein ERP-System ist, kann zudem für die werteflussrelevanten Funktionen auf standardisierte Funktionen des ERP-Systems zurückgegriffen werden, wodurch die Modellierung und Ausführung des Geschäftsprozesses wesentlich vereinfacht wird. Insbesondere kann hierdurch ein ERP-System eines Dritten, z.B. eines Kunden oder Geschäftspartners eines Logistikdienstleisters, schnell und aufwandsarm an das erste Computersystem angebunden werden.

Die Modellierung des Geschäftsprozesses erfolgt vorteilhafter Weise auf Basis standardisierter Vorlagen. Dies führt zur Reduzierung der pro Geschäftsprozess anfallenden Kosten bezüglich seiner Modellierung, Pflege und Verwaltung.

Bevorzugt handelt es sich bei den Vorlagen um Beschreibungen logistischer Elementarprozesse. Unter logistischen Elementarprozessen werden hierbei Prozesse verstanden, die in gleicher oder sehr ähnlicher Form in einer größeren Zahl von Geschäftsprozessen vorkommen. Beispiele für derartige logistische Elementarprozesse sind die Prozesse für die Auftragsabwicklung, das Warehousing, das Transportmanagement, die Beschaffung und Disposition, und die Exportabwicklung.

Gemäß einer vorteilhaften Ausgestaltung des erfindungsgemäßen Verfahrens sind die auftragsrelevanten Funktionen, die bestandsrelevanten Funktionen und die werteflussrelevante Funktionen in Form von Methoden von Business-Objekten definiert. Derartige Objekte sind aus dem Bereich der ERP-Systeme bekannt. Reale Objekte, wie z.B. ein Mitarbeiter oder ein Kundenauftrag, werden in ERP-Systemen als Business-Objekte abgebildet.

Ein erfindungsgemäßes System zur Steuerung der Abwicklung von Geschäftsprozessen der Logistik, insbesondere der Ersatzteillogistik, umfasst ein Modellierungswerkzeug zum Modellieren des Geschäftsprozesses als eine ereignisgesteuerte Prozesskette, wobei durch die ereignisgesteuerte Prozesskette auftragsrelevante, bestandsrelevante und werteflussrelevante Funktionen definiert sind, und ein erstes Computersystem und ein zweites Computersystem zur Ausführung der ereignisgesteuerten Prozesskette, wobei das erste und das zweite Computersystem unabhängige voneinander betreibbar sind. Die Ausführung der auftragsrelevanten und bestandsrelevanten Funktionen erfolgt hierbei in dem ersten Computersystem und die Ausführung der werteflussrelevanten Funktionen in dem zweiten Computersystem.

Ein erfindungsgemäßes Logistikmanagementsystem umfasst ein Modellierungswerkzeug zum Modellieren des Geschäftsprozesses als eine ereignisgesteuerte Prozesskette, wobei durch die ereignisgesteuerte Prozesskette auftragsrelevante, bestandsrelevante und werteflussrelevante Funktionen definiert sind, wobei die Ausführung der auftragsrelevanten und bestandsrelevanten Funktionen in dem Logistikmanagementsystem erfolgt und wobei das Logistikmanagementsystem zur Ausführung der werteflussrelevanten Funktionen mit einem ERP-System koppelbar ist.

Die für das erfindungsgemäße Verfahren genannten Vorteile gelten für diese Systeme entsprechend.

Die Erfindung sowie weitere vorteilhafte Ausgestaltungen der Erfindung gemäß Merkmalen der Unteransprüche werden im Folgenden anhand von Ausführungsbeispielen in den Figuren näher erläutert. Es zeigen:
- FIG 1: ein erstes Ausführungsbeispiel eines Systems zur Steuerung der Abwicklung von Geschäftsprozessen der Ersatzteillogistik,
- FIG 2: ein Beispiel für eine Modellierung eines Geschäftsprozesses als eine ereignisgesteuerte Prozesskette,
- FIG 3: ein Beispiel für ein Modellierungswerkzeug zur Modellierung eines Geschäftsprozesses,
- FIG 4: ein Beispiel für die Definition von auftrags- und bestandsrelevanten Funktionen in einem Business-Objekt,
- FIG 5: ein zweites Ausführungsbeispiel für ein System zur Steuerung der Abwicklung von Geschäftsprozessen der Ersatzteillogistik.

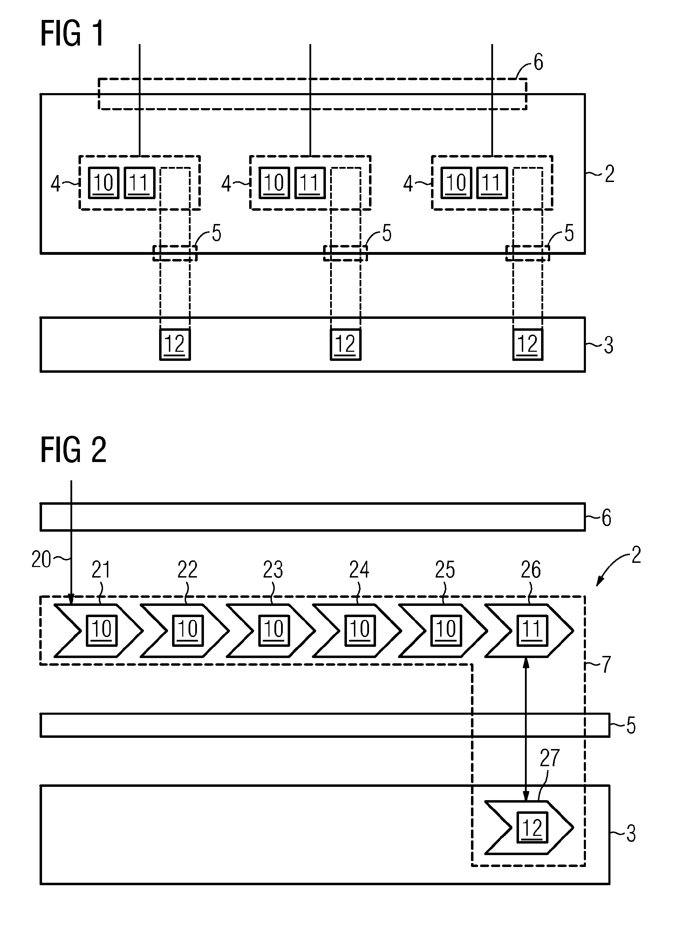

FIG 1 zeigt ein erfindungsgemäßes System 1 zur Steuerung der Abwicklung von Geschäftsprozessen der Ersatzteillogistik. Das System 1 umfasst ein Logistikmanagementsystem 2 und ein ERP-System 3. In dem Logistikmanagementsystem 2 sind mehrere Geschäftsprozesse 4 als ereignisgesteuerte Prozessketten 7, wie z.B. in FIG 2 veranschaulicht, beschrieben, die miteinander verbundene Arbeitspakete aufweisen, in denen auftragsrelevante Funktionen 10, bestandsrelevante Funktionen 11 und werteflussrelevante Funktionen 12 beschrieben sind. Die Ausführung der auftragsrelevanten Funktionen 10 und der bestandsrelevanten Funktionen 11 erfolgt hierbei in dem Logistikmanagementsystem 2 und die Ausführung der werteflussrelevanten Funktionen 12 in dem ERP-System 3. Bei den werteflussrelevanten Funktionen 12 handelt es sich hierbei bevorzugt um Standardfunktionen des ESP-Systems.

Auftragsrelevante Funktionen 10 sind Funktionen aus dem Bereich der Verwaltung von Ausliefer-/Rücklieferaufträgen, Terminierung und Transportdienstleistersteuerung (z.B. Auftragserfassung, Lieferschein erstellen, Material verpacken, Ladeliste erzeugen).

Bestandsrelevante Funktionen 11 sind Funktionen aus dem Bereich des mengenmäßigen Bestands-, Zustands- und Verfügbarkeitsmanagements (z.B. Warenausgang buchen, Wareneingang buchen, Neuteil buchen, Waren einlagern).

Werteflussrelevante Funktionen 12 sind Funktionen im Zusammenhang mit der wertmäßigen Bestandsführung sowie der Rechnungsstellung und der Gutschriftenverbuchung.

Für die Ansteuerung der werteflussrelevanten Funktionen 12 ist das Logistikmanagementsystem 2 mit dem ERP-System 3 über standardisierte Schnittstellen 5, beispielsweise über so genannte Standard BAPIS, koppelbar.

Über eine Benutzerschnittstelle 6 ist für einen Nutzer des Systems 1 ein gewünschter Geschäftsprozess 4 auswählbar und ein oder mehrere Programme zur Steuerung dessen Abwicklung zum Ablauf bringbar.

Bei dem Logistikmanagementsystem 2 und dem ERP-System 3 handelt es sich um unabhängig voneinander betreibbare Systeme, das heißt der Betrieb des Logistikmanagementsystems 2 kann unabhängig von dem Betrieb des ERP-Systems 3 erfolgen. So kann zum Beispiel bei einem Ausfall des ERP-Systems 3 das Logistikmanagement 2 weiter betrieben und die Abwicklung der zeitkritischen auftragsrelevanten und bestandsrelevanten, d.h. eigentlichen logistischen Funktionen gesteuert werden.

Das Logistikmanagementsystem 2 kann beispielsweise von einem Logistikdienstleister betrieben werden, der für einen Kunden die Abwicklung der Ersatzteillogistik übernimmt und über die Schnittstellen 5 die zugeordneten Werteflüsse in dem ERP-System des Kunden steuert. Mitarbeiter des Kunden können dann über die Benutzerschnittstelle 5 einen gewünschten Geschäftsprozess auswählen und dessen Abwicklung initiieren.

Wie FIG 2 beispielhaft für einen Geschäftsprozess "Ersatzteilverkauf" zeigt, ist ein Geschäftsprozess in dem Logistikmanagementsystem 2 als eine ereignisgesteuerte Prozesskette 7 modelliert. Die ereignisgesteuerte Prozesskette 7 weist hierbei mehrere miteinander verbundene Arbeitspakete 21 - 27 auf.

Wenn über die Benutzerschnittstelle 6 des Logistikmanagementsystems 2 ein Verkaufsauftrag 20 erfasst wird, wird der Geschäftsprozess "Verkauf" zum Ablauf gebracht. Im Logistikmanagementsystem 2 werden daraufhin der Reihe nach die Arbeitspakete "Auftragserfassung" 21, "Lieferschein erstellen" 22, "Material kommissionieren" 23, "Material verpacken" 24, "Ladeliste erzeugen" 25 und "Auftrag im ERP-System anlegen" 27 angestoßen.

Durch die Arbeitspakete 21 - 25 werden auftragsrelevante Funktionen und durch das Arbeitspaket 26 bestandsrelevante Funktionen definiert, die in dem Logistikmanagementsystem 2 zur Ausführung gebracht werden. Durch das Arbeitspaket 27 werden dagegen werteflussrelevante Funktionen definiert, die im ERP-System 2 zur Ausführung gebracht werden. Die Ausführung des Arbeitspaketes 27 wird hierbei durch eine bestandsrelevante Funktion des Arbeitspaketes "Warenausgang buchen" 26 über die Schnittstelle 5 angestoßen.

Beispiele für durch die Arbeitspakete 21 - 25 ausgelöste auftragsrelevanten Funktionen sind "Auftrag anlegen", "Lieferschein erstellen", "Verpackungsliste erzeugen". Im Fall des Arbeitspaketes 26 werden beispielsweise die bestandsrelevanten Funktionen "Materialmenge zubuchen", "Inventarkorrektur", "Materialmenge abbuchen" und im Fall des Arbeitspaketes 27 die werteflussrelevanten Funktionen "Bestandswert zu-/abbuchen", "Verbrauch buchen", "Rechnung erzeugen" ausgelöst.

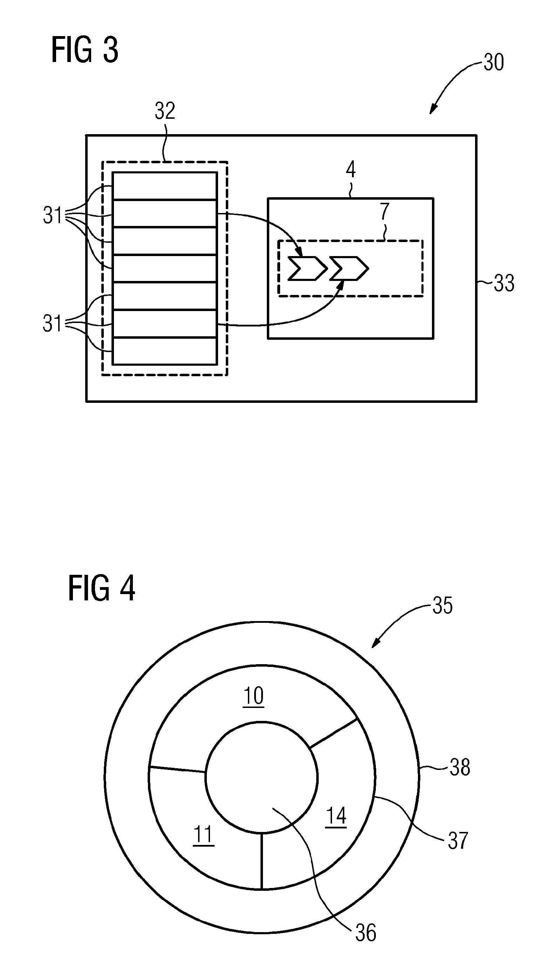

Wie vereinfacht in FIG 3 dargestellt, erfolgt die Modellierung der Geschäftsprozesse 4 in dem Logistikmanagementsystem 2 mit Hilfe eines Modellierungswerkzeuges 30 auf Basis standardisierter Vorlagen 31, die logistische Elementarprozesse beschreiben, und die in dem Logistikmanagementsystems 2 abgespeichert sind. Bei den logistischen Elementarprozessen handelt es sich um logistische (Teil-)Prozesse, die in gleicher oder sehr ähnlicher Form in einer größeren Zahl von Geschäftsprozessen vorkommen. Beispiele für logistische Elementarprozesse sind Auftragsabwicklung, Warehousing, Auslieferung, Rücklieferung, Disposition. Mit Hilfe derartiger logistischer Elementarprozesse können im Rahmen einer Analyse komplexe Geschäftsprozesse in standardisierte Teilprozesse aufgebrochen, transparent gemacht und anschließend korrekt modelliert werden.

Das Modellierungswerkzeug 30 umfasst einen Prozesseditor, durch den auf einer grafischen Benutzeroberfläche 33 eine ereignisgesteuerte Prozesskette 7 eines gewünschten Geschäftsprozess 4 durch Auswahl und anschließende logische und zeitliche Verknüpfung logistischer Elementarprozesse 31 aus einer Bibliothek 32 logistischer Elementarprozesse definiert werden kann. Die logistischen Elementarprozesse 31 können hierbei noch innerhalb eines festgelegten Rahmens individualisiert werden. Bevorzugt ist das Modellierungswerkzeug 30 in das Logistikmanagementsystem integriert, es kann aber auch als von dem Logistikmanagementsystem unabhängiges Werkzeug vorliegen.

Bevorzugt sind die auftragsrelevanten Funktionen 10, die bestandsrelevanten Funktionen 11 und die werteflussrelevanten Funktionen 12 in dem Logistikmanagementsystem 2 und dem ERP-System 3 in Form von Methoden von so genannten Business-Objekten definiert. Ein Business Objekt ist das Abbild eines betriebswirtschaftlichen Sachverhaltes, wie z.B. eines Mitarbeiters oder eines Kundenauftrages, in einem ERP-System. Es umfasst sowohl die Funktionalität (in Form von Methoden) als auch die Daten (in Form von Attributen) dieses Sachverhaltes.

FIG 4 zeigt beispielhaft und in vereinfachter Darstellung ein Business-Objekt 35 des Logistikmanagementsystems 2. Eine innerste Schicht 36 des Business-Objektes enthält die eigentlichen Daten des Objekts. Eine zweite Schicht 37 enthält Methoden, darunter z.B. auftragsrelevante Funktionen 10, bestandsrelevante Funktionen 11 und Status- und Zustandsfunktionen 14. Eine dritte Schicht 38 beschreibt die Implementierung und Struktur des Business-Objektes und definiert die Schnittstelle des Objekts zur Außenwelt.

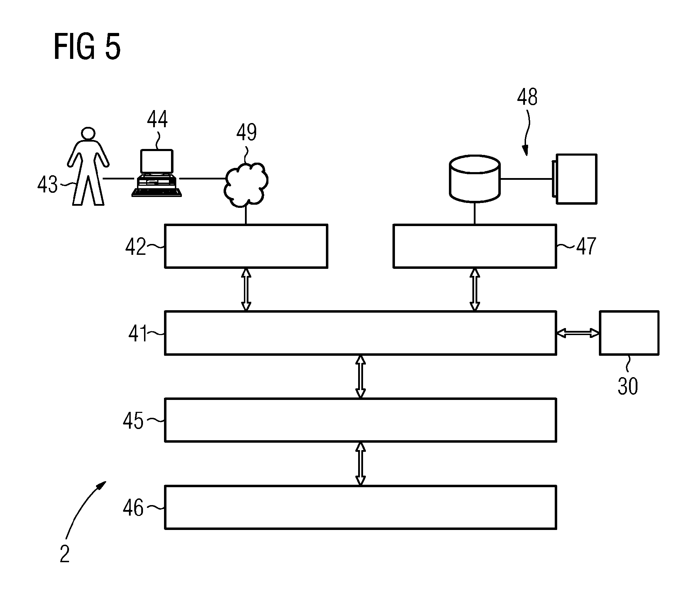

Bei einem in FIG 5 dargestellten weiteren Ausführungsbeispiel weist das Logistikmanagementsystem 2 zur Steuerung der Abwicklung der Geschäftsprozesse eine Prozesssteuerung 41 und zur Steuerung der Ein- und Ausgaben eines Benutzers über eine Benutzerschnittstelle des Logistikmanagementsystem 21 eine von der Prozesssteuerung unabhängige Benutzerschnittstellensteuerung 42 auf. Die Benutzerschnittstellensteuerung dient zur Steuerung der Eingaben eines Benutzers 43 und der Ausgaben an den Benutzer 43 auf einer Arbeitsstation 44. Die Ein- und Ausgaben erfolgen hierbei über ein Netzwerk 49, z.B. das Internet.

Die Prozesssteuerung 41 steuert den zeitlichen und logischen Abfolge der Aktivitäten der logistischen Elementarprozesse eines von dem Benutzer 43 zum Ablauf gebrachten Geschäftsprozesses und somit der zugeordneten der auftragsrelevanten, bestandsrelevanten und werteflussrelevanten Funktionen. Die Beschreibung des Geschäftsprozesses ist hierbei in der Prozessdatenbank 46 gespeichert. In einer Objekt-Datenbank 45 sind die zugehörigen Business-Objekte gespeichert, die die auftrags- und bestandsrelevanten Funktionen definieren. Das Modellierungswerkzeug 30 ist mit der Prozesssteuerung 41 verbunden.

Mittels der Benutzeroberflächensteuerung 42 kann dynamisch eine für den Benutzer 43 auf einer Bedienoberfläche der Arbeitsstation 44 dargestellte grafische Benutzeroberfläche erzeugt werden. Durch die Benutzerschnittstellensteuerung 42 kann beispielsweise überprüft werden, ob sämtliche für einen gewünschten Prozessablauf benötigten Eingaben des Benutzers vorliegen, d.h. sämtliche Eingabefelder auf der Bedienoberfläche belegt sind. Da die Prozesssteuerung nicht direkt, sondern über die Benutzerschnittstellensteuerung 42 mit der Benutzeroberfläche der Arbeitsstation 44 gekoppelt ist, sind die Business-Objekte nicht direkt mit der Benutzeroberfläche verbunden. Es sind somit auch Rückwärtsbewegungen im Geschäftsprozess möglich.

Neben der Initialisierung von Prozessen durch einen Benutzer 43 über die Benutzerschnittstellensteuerung 42 können Geschäftsprozesse auch über eine EDI-Schnittstelle 47 von externen Systemen 48 initialisiert werden. Eine der EDI-Schnittstelle 47 zugeordnete EDI-Schnittstellen-Steuerung ermittelt, welche Logistikprozesse von dem externen System gewünscht sind und ruft zu deren Ablauf die Prozesssteuerung 41 auf.

## Patentansprüche

1. Verfahren zur Steuerung der Abwicklung von Geschäftsprozessen der Logistik, insbesondere der Ersatzteillogistik, wobei
- ein Geschäftsprozess (4) als eine ereignisgesteuerte Prozesskette (7) modelliert wird, in der zur Abwicklung des Geschäftsprozesses (4) notwendige auftragsrelevante, bestandsrelevante und werteflussrelevante Funktionen (10, 11, 12) definiert sind,
- die Ausführung der ereignisgesteuerten Prozesskette (7) auf einem ersten Computersystem (2) und einem zweiten Computersystem (3) erfolgt, wobei das erste und das zweite Computersystem unabhängig voneinander betreibbar sind,
- die Ausführung der auftragsrelevanten und der bestandsrelevanten Funktionen (10, 11) in dem ersten Computersystem (2) und die Ausführung der werteflussrelevanten Funktionen (12) in dem zweiten Computersystem (3) erfolgt.

2. Verfahren nach Anspruch 1, wobei das erste Computersystem (2) ein Logistikmanagementsystem ist.

3. Verfahren nach Anspruch 1 oder 2, wobei das zweite Computersystem (3) ein ERP-System ist.

4. Verfahren nach einem der vorhergehenden Ansprüche, wobei die Modellierung des Geschäftsprozesses (4) auf Basis standardisierter Vorlagen (31) erfolgt.

5. Verfahren nach Anspruch 4, wobei die standardisierten Vorlagen logistische Elementarprozesse (31) beschreiben.

6. Verfahren nach einem der vorhergehenden Ansprüche, wobei die auftragsrelevanten Funktionen (10), die bestandsrelevanten Funktionen (11) und die werteflussrelevante Funktionen (12) in Form von Methoden von Business-Objekten (35) definiert sind.

7. System (1) zur Steuerung der Abwicklung von Geschäftsprozessen der Logistik, insbesondere der Ersatzteillogistik, umfassend
- ein Modellierungswerkzeug (30) zum Modellieren eines Geschäftsprozesses (4) als eine ereignisgesteuerte Prozesskette (7), wobei durch die ereignisgesteuerte Prozesskette (7) auftragsrelevante, bestandsrelevante und werteflussrelevante Funktionen (10, 11, 12) definiert sind,
- ein erstes Computersystem (2) und ein zweites Computersystem (3) zur Ausführung der ereignisgesteuerten Prozesskette (7), wobei das erste und das zweite Computersystem (2, 3) unabhängige voneinander betreibbar sind,
- die Ausführung der auftragsrelevanten und der bestandsrelevanten Funktionen (10, 11) in dem ersten Computersystem (2) und die Ausführung der werteflussrelevanten Funktionen (12) in dem zweiten Computersystem (3) erfolgt.

8. System (1) nach Anspruch 7, wobei das erste Computersystem (2) ein Logistikmanagementsystem ist.

9. System (1) nach Anspruch 7 oder 8, wobei das zweite Computersystem (3) ein ERP-System ist.

10. System (1) nach einem der Ansprüche 7 bis 9, wobei das Modellierungswerkzeug (30) in das erste Computersystem (2) integriert ist.

11. System (1) nach einem der Ansprüche 7 bis 10, wobei die Modellierung des Geschäftsprozesses (4) auf Basis standardisierter Vorlagen (31) erfolgt, die in dem System abgespeichert sind.

12. System (1) nach Anspruch 11, wobei die Vorlagen logistische Elementarprozesse (31) beschreiben.

13. System (1) nach einem der Ansprüche 7 bis 12, wobei die auftragsrelevanten Funktionen (10), die bestandsrelevanten Funktionen (11) und die werteflussrelevante Funktionen (12) in Form von Methoden von Business-Objekten (35) definiert.

14. System (1) nach einem der Ansprüche 7 bis 13, wobei das erste Computersystem (2) eine Prozesssteuerung (41) zur Steuerung der zeitlichen und logischen Abfolge der auftragsrelevanten Funktionen (10), der bestandsrelevanten Funktionen (11) und der werteflussrelevanten Funktionen (12) aufweist.

15. System (1) nach einem der Ansprüche 7 bis 14, wobei das erste Computersystem (2) mit dem zweiten Computersystem (3) über standardisierte Schnittstellen (5) koppelbar ist.

16. System (1) nach einem der Ansprüche 7 bis 15, mit zumindest einer Benutzerschnittstelle (6), über die der Geschäftsprozesse (4) auswählbar und ein oder mehrere jeweils zugeordnete Programme zur Steuerung dessen Abwicklung zur Ausführung bringbar sind.

17. System (1) nach Anspruch 16, mit einer Benutzer-Schnittstellensteuerung (42) zur Steuerung der Benutzerein- und ausgaben über die Benutzerschnittstelle (6).

18. Logistikmanagementsystem (2) mit einem Modellierungswerkzeug zum Modellieren eines Geschäftsprozesses (4) als eine ereignisgesteuerte Prozesskette (7), wobei durch die ereignisgesteuerte Prozesskette (7) auftragsrelevante, bestandsrelevante und werteflussrelevante Funktionen (10, 11, 12) definiert sind, wobei die Ausführung der auftragsrelevanten und der bestandsrelevanten Funktionen (10, 11) in dem Logistikmanagementsystem (2) erfolgt und wobei das Logistikmanagementsystem zur Ausführung der werteflussrelevanten Funktionen (13) mit einem ERP-System (3) koppelbar ist.
